# EUROPÄISCHE PATENTSCHRIFT

(11) **EP 0 559 253 B1**
(45) Veröffentlichungstag und Bekanntmachung des Hinweises auf die Patenterteilung: **20.09.1995**
(21) Anmeldenummer: 93200322.1
(22) Anmeldetag: 05.02.1993
(51) Int. Cl.: B01D 53/34, B01D 53/12

(54) **Verfahren zum Entfernen von Schadstoffen aus Verbrennungsabgasen und Wirbelschichtreaktor hierzu**
Process for eliminating pollutants from combustion exhaust gases and fluidized bed reactor used therefor
Procédé pour éliminer des polluants de gaz de combustion et réacteur à lit fluidisé

(30) Priorität: 03.03.1992 DE 4206602
(43) Veröffentlichungstag der Anmeldung: 08.09.1993
(73) Patentinhaber: METALLGESELLSCHAFT AG, 60015 Frankfurt (DE)
(72) Erfinder: Thöne, Bernd, W-6360 Friedberg (DE); Schmidt, Gerhard, W-6367 Karben 1 (DE); Herrmann, Erhard, Dr., W-5090 Leverkusen 1 (DE)

(56) Entgegenhaltungen:
- EP-A- 0 172 588
- EP-A- 0 211 458
- EP-A- 0 254 402
- EP-A- 0 427 344
- EP-A- 0 463 957
- EP-A- 0 495 710

## Beschreibung

Die Erfindung betrifft ein Verfahren zum Entfernen von Schadstoffen und Staub aus einem Verbrennungsabgas, dabei wird das Abgas mit mindestens einem Absorptionsmittel versetzt und bei Temperaturen im Bereich von etwa 40 bis 500°C zunächst durch einen Venturihals und dann aufwärts durch einen Wirbelschichtreaktor und eine Entstaubungseinrichtung geleitet, ein Teil der in der Entstaubungseinrichtung abgeschiedenen Feststoffe wird in den Wirbelschichtreaktor zurückgeführt, mindestens ein Teil der in den Wirbelschichtreaktor zurückzuführenden Feststoffe wird mit einem Fördergas durch ein zentral im Venturihals angeordnetes Rohr aufwärts in den unteren Bereich des Reaktors eingeblasen. Zur Erfindung gehört auch ein Wirbelschichtreaktor zur Durchführung des Verfahrens.

Ein Verfahren dieser Art aber ohne das zentrale Rohr im Venturihals, ist im Europa-Patent 0 228 111 und auch in der DE-A-3 701 527 beschrieben. Beim Verfahren des Europa-Patents vermischt man das Abgas mit calciumhaltigem Absorptionsmittel, um Schwefeloxide zu binden. Der DE-A-3 701 527 zufolge verteilt man NH₃ und einen Entstickungskatalysator, der u.a. FeSO₄ auf einem Träger enthält, in das Abgas, um NOₓ zu reduzieren. Ein Verfahren der eingangs genannten Art ist auch aus EP-A-0 463 957 bekannt, doch arbeitet man hierbei nicht mit einem Wirbelschichtreaktor, sondern mit einer pneumatischen Förderstrecke.

Der Erfindung liegt die Aufgabe zugrunde, die bekannten Arbeitsweisen verbessern und dabei vor allem für eine gute Verteilung der in den Wirbelschichtreaktor zurückgeführten Feststoffe zu sorgen. Beim eingangs genannten Verfahren geschieht dies erfindungsgemäß dadurch, daß man mindestens einen Teil des Verbrennungsabgases durch einen das Rohr umgebenden, zum Wirbelschichtbereich hin offenen Ringraum im aufwärts gerichteten Strom in den Reaktor einleitet, wobei zwischen dem Rohr und dem Ringraum ein Verdrängerkörper angeordnet ist, der den Abstand zwischen dem Rohr und dem Ringraum vergrößert. Durch den Verdrängerkörper wird der innere Durchmesser des Ringraums vergrößert, so daß auch der Bereich nahe der Innenwand des Wirbelschichtreaktors intensiv mit Verbrennungsabgas bestrichen wird. Das Fördergas sorgt dafür, daß die Feststoffe im gewünschten Bereich in die Wirbelschicht eintreten und vom Verbrennungsgas erfaßt und möglichst gleichmäßig verteilt werden. Die chemischen Reaktionen zum Reduzieren der Stickstoffoxide laufen dadurch beschleunigt ab.

Als Fördergas kommen verschiedene Gase, z.B. Inertgas oder Luft, infrage. Eine weitere Möglichkeit besteht darin, als Fördergas Verbrennungsabgas zu verwenden, wobei es sich um unbehandeltes oder auch um bereits entstaubtes Abgas handeln kann.

Als Absorptionsmittel können dem Wirbelschichtreaktor Entschwefelungsmittel und/oder Entstickungsmittel zugeführt werden. Entschwefelungsmittel sind z.B. NaOH oder calciumhaltige feinkörnige Substanzen wie etwa Ca(OH)₂ oder CaO. Zum Entsticken kann man z.B. NH₃ mit einem körnigen Katalysator wie etwa Eisensulfat verwenden.

Zur Erfindung gehört ferner ein Wirbelschichtreaktor zur Durchführung des Verfahrens, wie er im zweiten unabhängigen Patentanspruch definiert ist.

Ausgestaltungsmöglichkeiten des Verfahrens und der Vorrichtung werden mit Hilfe der Zeichnung erläutert. Sie zeigt ein vollständiges Verfahrensschema mit schematisch dargestelltem Wirbelschichtreaktor im Längsschnitt.

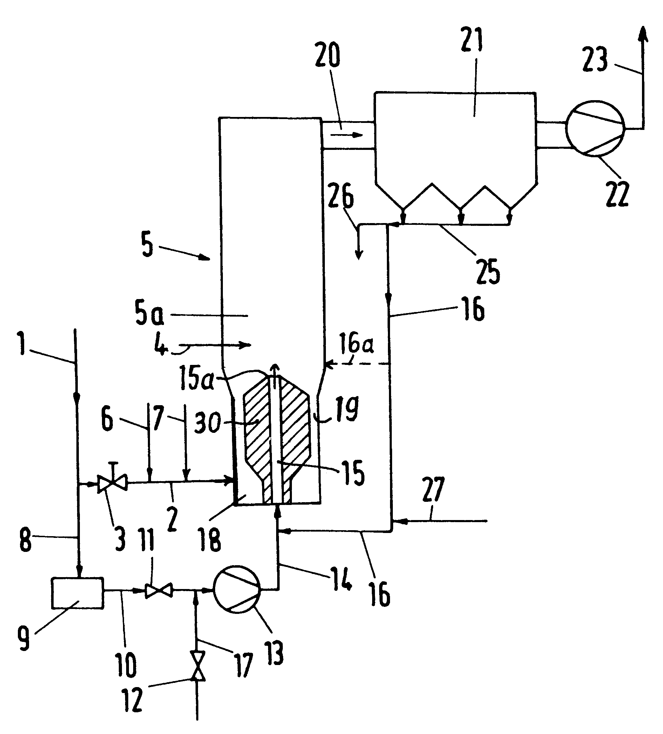

Das Verbrennungsabgas, das z.B. aus einer mit Kohle, Gas oder Heizöl gefeuerten Verbrennungsanlage stammt, wird gemäß Fig. 1 in der Leitung (1) herangeführt. Das Abgas, das bereits teilweise gekühlt sein kann, weist Temperaturen im Bereich von 40 bis 600°C und vorzugsweise von höchstens 500°C auf. Das Abgas wird in einen Hauptstrom und einen Reststrom aufgeteilt, wobei der Hauptstrom durch eine Leitung (2) mit einem Regelorgan (3) einem Wirbelschichtreaktor (5) zugeführt wird. Die Aufteilung auf einen Hauptstrom (Leitung (2)) und einen Reststrom (Leitung (8)) erfolgt zumeist im Verhältnis von 10 : 1 bis 100 : 1.

Wenn man NOₓ entfernen will, gibt man dem Gas der Leitung (2) durch die Leitung (6) einen Entstickungskatalysator und durch die Leitung (7) in dosierter Menge NH₃ zum Reduzieren der Stickstoffoxide zu. Pro Mol NOₓ im Abgas werden üblicherweise etwa 0,8 bis 1,5 Mol NH₃ zugemischt. Als Entstickungskatalysator, der bevorzugt in Pulverform dem Abgas zugegeben wird, verwendet man in bekannter Weise z.B. Eisensulfat.

Der in der Leitung (8) abgezweigte Teil des Verbrennungsabgases wird, falls nötig, zur groben Entstaubung zunächst durch einen Abscheider (9) geführt, bei dem es sich z.B. um einen Zyklon oder ein Gewebefilter handeln kann. Anschließend gelangt das Gas durch die Leitung (10) und die geöffnete Klappe (11) bei geschlossenem Absperrorgan (12) zu einem Gebläse (13), welches das Gas durch die Leitung (14) in ein Rohr (15) drückt. Der Abscheider (9) dient dem Schutz des Gebläses (13) vor zu starker Beanspruchung durch grobe Staubteilchen.

Dem Abgas der Leitung (14) gibt man durch die Leitung (16) feinkörnige Feststoffe zu, die durch das als Fördergas dienende Abgas in den Reaktor (5) eingeblasen werden. Den Feststoffen der Leitung (16) führt man durch die Leitung (27) feinkörniges Entschwefelungsmitteil, z.B. Ca(OH)₂ oder CaO, zu, wenn man aus dem Abgas Schwefeldioxide entfernen will. Das senkrechte Rohr (15) befindet sich zentral im unteren Bereich des Wirbelschichtreaktors (5). Es ist von einem Verdrängerkörper (30), einer Einlaßkammer (18) und einem Ringraum (19) umgeben. Der Verdrängerkörper vergrößert den Abstand zwischen dem Rohr (15) und dem Ringraum (19). Das durch die Leitung (2) herangeführte Abgas tritt in die Kammer (18) ein und strömt dann aufwärts um den Verdrängerkörper (30) herum durch den verengten Ringraum (19) in den erweiterten Bereich des Wirbelschichtreaktors (5). Feststoffe und Fördergas treten aus der Mündung (15a) des Rohrs (15) in den Reaktor ein. Wenn man bei Temperaturen von unter 100°C entschwefeln will, empfiehlt es sich, Wasser durch die Leitung (4) in den Reaktor (5) einzudüsen.

Abgas, NH₃ und Entstickungskatalysator sowie aus dem Rohr (15) kommendes Fördergas und mitgeführte Feststoffe, die Entschwefelungsmittel enthalten, vermischen sich im Wirbelbereich (5a) des Reaktors (5). Dabei reagieren die Stickstoffoxide mit NH₃ zu N₂ und Wasser und das Entschwefelungsmittel bindet SO₂ und SO₃. Im Wirbelbereich (5a) herrschen Gasgeschwindigkeiten und Feststoffkonzentrationen, wie man sie von der zirkulierenden Wirbelschicht her kennt. Die Temperaturen liegen hier im Bereich von 40 bis 500°C. Die Gasgeschwindigkeiten im Ringraum (19) liegen zumeist im Bereich von 30 bis 90 m/sec und im Rohr (15) im Bereich von 2 bis 30 m/sec.

Als Fördergas kann man auch ein anderes Gas, z.B. entstaubtes Abgas oder Luft, verwenden. Man leitet dieses Gas durch die Leitung (17) und das geöffnete Absperrorgan (12) zum Gebläse (13), wobei die Klappe (11) geschlossen ist. Das Abgas der Leitung (1) wird in diesem Fall vollständig durch die Leitung (2) in den Reaktor (5) geführt.

Das Feststoffe enthaltende Abgas verläßt den Reaktor (5) durch den Kanal (20) und gelangt zu einer Entstaubungseinrichtung (21), z.B. einem Elektrofilter. Möglich ist es auch, als Entstaubungseinrichtung z.B. ein Schlauchfilter zu verwenden. Behandeltes Abgas wird von einem Gebläse (22) aus der Entstaubungseinrichtung (21) angesaugt und durch den Kamin (23) abgeleitet).

Die in der Entstaubungseinrichtung (21) anfallenden Feststoffe gelangen zunächst zu einer Sammelleitung (25) und werden teilweise durch die Leitung (16) zurück zum Reaktor (5) geführt. Ein Teil der Feststoffe wird durch die Leitung (26) aus dem Prozeß entfernt.

Wenn man nicht die gesamten in den Reaktor (5) zurückzuführenden Feststoffe durch das Rohr (15) einblasen will, kann man einen Teil der Feststoffe z.B. auch durch die gestrichelt eingezeichnete Leitung (16a) einbringen. Die günstige Verteilung der Feststoffe wird hierdurch nicht oder kaum verändert.

### Beispiel:

Hierbei geht es um die Reinigung eines Rauchgases aus einem Kraftwerk, das in einer Menge von 760 000 Nm³/h in der Leitung (1) herangeführt wird. Das Rauchgas wird in einer der Zeichnung entsprechenden Anlage ohne die Leitungen (8) und (16a) behandelt. Pro Nm³ enthält das Rauchgas 0,6 g Feststoffe, insbesondere Flugasche. Die Entstaubungseinrichtung (21) ist ein Elektrofilter mit 5 Feldern, es erreicht einen Entstaubungsgrad von 99,992 %. Pro Stunde werden durch die Leitung (16) 700 000 kg Feststoffe zurückgeführt, etwa 1,6 % der im Elektrofilter abgeschiedenen Feststoffe entfernt man durch die Leitung (26).

Das Rauchgas, das pro Nm³ 1 000 mg NOₓ, 1 800 mg SO₂ und 3 g Staub enthält, wird entschwefelt, entstickt und entstaubt. Das ganze Rauchgas wird mit einer Temperatur von 420°C durch die Leitung (2) in den Reaktor (5) geleitet, als Fördergas führt man Luft in einer Menge von 14 000 Nm₃/h durch die Leitungen (17) und (14) zu. Der untere Bereich des Reaktors ist mit einem Verdrängerkörper (30) ausgestattet. Pro Nm³ Rauchgas gibt man 0,3 g Eisensulfat, 0,31 mg NH₃ und 3,4 g Ca(OH)₂ zu. Das gereinigte Rauchgas in der Leitung (23) enthält pro Nm3 _{noch 100 mg NOx}, 120 mg SO₂ und 30 mg Staub.

## Patentansprüche

1. Verfahren zum Entfernen von Schadstoffen und Staub aus einem Verbrennungsabgas, dabei wird das Abgas mit mindestens einem Absorptionsmittel versetzt und bei Temperaturen im Bereich von etwa 40 bis 500°C zunächst durch einen Venturihals und dann aufwärts durch einen Wirbelschichtreaktor und eine Entstaubungseinrichtung geleitet, ein Teil der in der Entstaubungseinrichtung abgeschiedenen Feststoffe wird in den Wirbelschichtreaktor zurückgeführt, mindestens ein Teil der in den Wirbelschichtreaktor zurückzuführenden Feststoffe wird mit einem Fördergas durch ein zentral im Venturihals angeordnetes Rohr aufwärts in den unteren Bereich des Reaktors eingeblasen, dadurch gekennzeichnet, daß man mindestens einen Teil des Verbrennungsabgases durch einen das Rohr umgebenden, zum Wirbelschichtbereich hin offenen Ringraum im aufwärts gerichteten Strom in den Reaktor einleitet, wobei zwischen dem Rohr und dem Ringraum ein Verdrängerkörper angeordnet ist, der den Abstand zwischen dem Rohr und dem Ringraum vergrößert.

2. Verfahren nach Anspruch 1, dadurch gekennzeichnet, daß man als Fördergas Verbrennungsabgas verwendet.

3. Verfahren nach Anspruch 1, dadurch gekennzeichnet, daß man Luft als Fördergas verwendet.

4. Verfahren nach Anspruch 1 oder einem der folgenden, dadurch gekennzeichnet, daß man Entschwefelungsmittel in den Wirbelschichtreaktor einleitet.

5. Verfahren nach Anspruch 1 oder einem der folgenden, dadurch gekennzeichnet, daß man NH₃ und einen Entstickungskatalysator in den Wirbelschichtreaktor einleitet.

6. Wirbelschichtreaktor zum Entfernen von Schadstoffen, die mit einem Verbrennungsabgas in den Reaktor geleitet werden, durch Zugabe von mindestens einem Absorptionsmittel durch einen Venturihals im unteren Bereich des Reaktors, mit einer Rückführung für aus dem oberen Bereich des Reaktors ausgetragene Feststoffe, wobei die Rückführung mit einem im unteren Bereich des Reaktors im Venturihals angeordneten, aufwärts gerichteten Rohr verbunden ist, das auch eine Zuleitung für ein Fördergas aufweist, dadurch gekennzeichnet, daß das Rohr von einem Verdrängerkörper umgeben ist, daß der Verdrängerkörper von einem zum Wirbelschichtbereich des Reaktors hin offenen Ringraum umgeben ist und daß der Ringraum eine Zuleitung für Verbrennungsabgas aufweist.

## Claims

1. A method for removing pollutants and dust from a combustion exhaust gas in which at least one absorbent is added to the exhaust gas and the gas is passed first of all through a venturi neck and then upwards through a fluidised bed reactor and a dust removal apparatus at temperatures in the range of about 40 to 500°C, a portion of the solids separated out in the dust removal apparatus is recycled into the fluidised bed reactor, at least a portion of the solids to be recycled into the fluidised bed reactor is blown upwards into the lower region of the reactor with an entraining gas through a tube arranged centrally in the venturi neck, characterised in that at least a portion of the combustion exhaust gas is introduced into the reactor in an upward-directed stream through an annular space surrounding the tube and open towards the fluidised bed region, with a displacement member being arranged between the tube and the annular space, which member increases the distance between the tube and the annular space.

2. A method according to Claim 1, characterised in that combustion exhaust gas is used as the entraining gas.

3. A method according to Claim 1, characterised in that air is used as the entraining gas.

4. A method according to Claim 1 or one of the following claims, characterised in that a desulphurisation agent is introduced into the fluidised bed reactor.

5. A method according to Claim 1 or one of the following claims, characterised in that NH₃ and a denitrating catalyst are introduced into the fluidised bed reactor.

6. A fluidised bed reactor for removing pollutants which are passed into the reactor with a combustion exhaust gas, by the addition of at least one absorbent through a venturi neck in the lower region of the reactor, with a return means for solids discharged from the upper region of the reactor, the return means being connected to an upward-directed tube located in the lower region of the reactor in the venturi neck, which tube also has a feed line for an entraining gas, characterised in that the tube is surrounded by a displacement member, that the displacement member is surrounded by an annular space open towards the fluidised bed region of the reactor and that the annular space has a feed line for combustion exhaust gas.

## Revendications

1. Procédé pour débarrasser un gaz de combustion de substances polluantes et de poussière, selon lequel on mélange au moins un agent absorbant au gaz de combustion et on les fait passer, à des températures dans la gamme d'environ 40 à 500°C, tout d'abord dans un col de venturi, puis selon un déplacement ascendant, dans un réacteur à lit fluidisé et un dispositif de dépoussiérage, une partie des substances solides déposées dans le dispositif de dépoussiérage étant renvoyée au réacteur à lit fluidisé, au moins une partie des substances solides devant être renvoyées au réacteur à lit fluidisé étant injectée par insufflation, selon un mouvement ascendant, à la partie inférieure du réacteur, à l'aide d'un gaz d'entraînement, au moyen d'un tube disposé en position centrée dans le col de venturi, caractérisé en ce qu'on introduit au moins une partie du gaz de combustion selon un courant ascendant dans le réacteur, par une chambre annulaire qui entoure le tube et est ouverte en direction de la zone du lit fluidisé, un corps de refoulement, qui augmente la distance entre le tube et la chambre annulaire, étant disposé entre ce tube et cette chambre annulaire.

2. Procédé suivant la revendication 1, caractérisé par le fait qu'on utilise du gaz de combustion comme gaz d'entraînement.

3. Procédé suivant la revendication 1, caractérisé par le fait qu'on utilise de l'air comme gaz d'entraînement.

4. Procédé suivant la revendication 1 ou l'une des suivantes, caractérisé par le fait qu'on introduit un agent de désulfuration dans le réacteur à lit fluidisé.

5. Procédé suivant la revendication 1 ou l'une des suivantes, caractérisé par le fait qu'on introduit du NH₃ et un catalyseur de dénitration dans le réacteur à lit fluidisé.

6. Réacteur à lit fluidisé pour se débarrasser des substances polluantes, qui sont envoyées avec un gaz de combustion dans le réacteur, par adjonction d'au moins un agent absorbant, par un col de venturi, dans la partie inférieure du réacteur, avec un système de renvoi pour les substances solides extraites de la partie supérieure du réacteur, et dans lequel le système de renvoi communique avec à un tube ascendant, qui est disposé dans la partie inférieure du réacteur dans le col de venturi et qui a également une canalisation d'amenée d'un gaz d'entraînement, caractérisé par le fait que le tube est entouré d'un corps de refoulement, que le corps de refoulement est entouré d'une chambre annulaire ouverte en direction de la zone du lit fluidisé du réacteur et que la chambre annulaire comporte une canalisation d'amenée pour le gaz de combustion.
